Europäisches Patentamt

European Patent Office

Office européen des brevets

(19)

(11) Numéro de publication: **0 214 926**
**B1**

(12) **FASCICULE DE BREVET EUROPEEN**

(45) Date de publication du fascicule du brevet:
**07.02.90**

(51) Int. Cl.⁴: **B23B 13/02**, B23Q 1/02

(21) Numéro de dépôt: **86810294.8**

(22) Date de dépôt: **07.07.86**

(54) **Dispositif guide barre.**

(30) Priorité: **10.09.85 CH 3911/85**

(43) Date de publication de la demande:
**18.03.87 Bulletin 87/12**

(45) Mention de la délivrance du brevet:
**07.02.90 Bulletin 90/6**

(84) Etats contractants désignés:
**CH DE FR GB IT LI SE**

(56) Documents cités:
**EP-A- 0 044 815**
**EP-A- 0 107 776**
**CH-A- 630 824**
**FR-A- 2 247 305**
**FR-A- 2 512 365**
**US-A- 4 129 220**

(73) Titulaire: **SAMECA S.A., Route de Diesse,
CH-2516 Lamboing(CH)**

(72) Inventeur: **Geiser, Markus, La Colline 306,
CH-2603 Péry(CH)**
Inventeur: **Juillerat, Pierre, Jolimont 23,
CH-2740 Moutier(CH)**

(74) Mandataire: **Seehof, Michel et al, c/o AMMANN
PATENTANWAELTE AG BERN Schwarztorstrasse 31,
CH-3001 Bern(CH)**

## Description

La présente invention concerne un dispositif guide barre pour tour monobroche, comportant un profilé porteur sur lequel est monté de manière amovible un élément de guidage d'une barre à usiner dont l'avance en direction du tour est commandée par un piston poussoir logé dans l'élément de guidage et une distribution d'huile sous pression injectée d'une part à l'arrière du piston poussoir pour commander l'avance de celui-ci dans l'élément de guidage et d'autre part latéralement, entre la barre à usiner et la paroi interne de son élément de guidage, pour produire un palier hydrodynamique supportant la barre à usiner mise en rotation par la poupée du tour. Un tel dispositif est connu du brevet US 4 507 992 du même titulaire. Ce dispositif connu comporte un profilé porteur en U ouvert à sa partie supérieure dans lequel sont montés des sièges de forme semi-cylindrique destinés à supporter le tube de guidage qui est fixé de manière amovible sur ces sièges par des brides articulées serrées par un écrou. Un tel dispositif présente les désavantages suivants. Il est de fabrication relativement coûteuse par le fait qu'il comporte plusieurs sièges qui doivent être assemblés avec soin pour garantir un excellent alignement et une bonne tenue du tube de guidage. La rigidité et stabilité d'un profilé ouvert ne sont pas idéales. L'échange des tubes de guidage est trop lent en raison des brides de fixation à serrage par écrou. L'huile qui sort à l'avant du tube de guidage est reconduite au groupe hydraulique par le profilé en U ouvert vers le haut, ce qui ne va pas sans risques de contamination de l'huile par des impuretés et poussières dans l'air ambiant. Il faut encore mentionner qu'un manque de stabilité du dispositif est générateur de vibrations indésirées qui sont transmises à la barre à usiner au détriment de la qualité de l'usinage.

Selon le brevet CH 514 381, on connaît un dispositif ravitailleur pour tour automatique avec un tube de guidage pour la barre à usiner et un piston-poussoir pour faire avancer la barre à usiner dans son tube de guidage en direction du tour, le piston-poussoir étant engagé avec jeu dans le tube et raccordé par son extrémité arrière à une source d'huile sous pression, l'huile s'écoulant de l'arrière vers l'avant du piston-poussoir à travers le jeu dans le tube de façon à baigner la barre. Dans ce dispositif, l'huile baignant la barre s'écoule obligatoirement à travers le jeu entre piston-poussoir et tube de guidage, de sorte que la quantité et la pression de cette huile n'est pas idéale lorsque de très grandes vitesses de rotation de la barre sont désirées.

Le brevet CH 576 304 décrit un dispositif ravitailleur pour tour automatique du même type que le précédent. Le piston-poussoir engagé avec jeu dans le tube de guidage comprend une voie interne de traversée d'huile, obturable et réglable par des moyens de réglage, cette voie interne étant en parallèle avec la voie constituée par le jeu du piston-poussoir dans son tube. Cependant, le réglage de la quantité d'huile délivrée par la voie interne ne peut se faire qu'à l'arrêt de la machine, lorsque le piston-poussoir est sorti du tube de guidage et par intervention manuelle sur une valve de ce piston-poussoir, ce qui ne contribue pas à réduire les temps morts de la machine.

Le document FR 2 512 365 concerne un tour d'outilleur dont les deux poupées ont chacune une section transversale fermée. Toutefois, une telle section fermée n'est pas prévue pour soutenir une tube de guidage ni pour permettre une distribution d'huile sous pression.

En conséquence, le but de la présente invention est de réaliser un dispositif guide barre ne présentant pas les inconvénients mentionnés ci-dessus, se présentant sous forme d'une unité de conception simple, parfaitement stable et compacte, permettant de très grandes vitesses de la barre à usiner sans nuire à la qualité de l'usinage. Pour atteindre ce but, le dispositif selon l'invention est réalisé comme indiqué dans de la revendication 1. Par le fait que le profilé porteur est de section transversale fermée, son moment d'inertie est augmenté, ce qui lui donne une grande rigidité et stabilité. En outre, le profilé servant de canal de retour pour l'huile qui sort à l'avant de l'élément de guidage, cette huile n'est pas en contact avec l'environnement ce qui diminue les risques qu'elle soit polluée par celui-ci. L'élément de guidage est monté directement sur le berceau du profilé, de sorte que les sièges mentionnés dans l'état de la technique et qui demandent un assemblage très précis sont supprimés. En outre, l'élément de guidage est monté et assemblé sur le profilé porteur par des brides de serrage rapide, ce qui augmente la rapidité d'échange de cet élément de guidage.

Selon un deuxième aspect de l'invention, il est prévu que l'élément de guidage comporte un premier tube fixe assemblé de manière amovible au profilé porteur, ce premier tube contenant un second tube servant de tube de guidage pour la barre à usiner. Le second tube tourne librement à l'intérieur du premier lorsque la barre est mise en rotation par la poupée du tour. Cette mesure telle que décrite dans la revendication 5 permet d'augmenter sensiblement la vitesse de rotation de la barre à usiner.

De préférence, il est prévu d'augmenter la rigidité et la stabilité du dispositif par l'adjonction à la base du profilé porteur d'un caisson fermé. Ce caisson peut être utilisé comme réservoir pour l'huile de sortie du dispositif et contenir le groupe hydraulique, ce qui permet alors de placer les conduites hydrauliques dans ce réservoir, à l'abri de l'environnement extérieur au dispositif. L'ensemble dispositif guide barre-caisson forme une unité autonome destinée à être montée sur les tours monobroches.

L'invention va être décrite ci-dessous, à titre d'exemple et à l'aide du dessin dans lequel:

La figure 1 est une coupe longitudinale du dispositif,

La figure 2 est une coupe selon la ligne II–II de la figure 1,

La figure 3 est une coupe selon la ligne III–III de la figure 1,

La figure 4 est une coupe longitudinale du piston poussoir dans le tube de guidage,

La figure 5 est un diagramme montrant le débit d'huile en fonction de la pression,

La figure 6 montre une variante de la disposition des ouvertures latérales du piston poussoir de la figure 4, et

La figure 7 est une coupe transversale du dispositif comprenant un caisson.

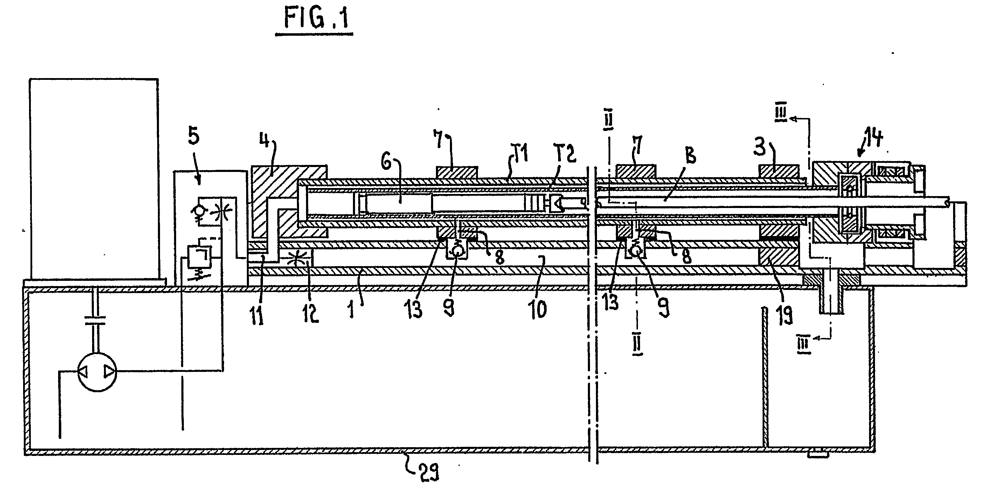

Selon figure 1, le dispositif comprend un profilé porteur 1, un élément de guidage 2 monté sur des supports avant 3 et arrière 4 du dispositif et un groupe hydraulique 5 fournissant au dispositif l'huile sous pression nécessaire pour commander l'avance d'un piston poussoir 6 logé dans l'élément de guidage 2 et pour alimenter l'espace annulaire entre la barre à usiner B et son tube de guidage T1, respectivement T2 de manière à supporter hydrodynamiquement la barre lorsque celle-ci est mise en rotation par la poupée du tour. La barre à usiner peut être de section circulaire ou polygonale. L'élément de guidage 2 comporte des bagues de centrage 7 par l'intermédiaire desquelles il repose sur le profilé porteur 1. Ces bagues comportent des ouvertures 8 communiquant par des valves de non retour 9 avec un canal 10 de distribution latérale d'huile dans l'élément de guidage. Les bagues de centrage 7 sont solidaires de l'élément de guidage 2 et elles s'enlèvent avec cet élément lorsque celui-ci doit être changé. Le dispositif est relié à un groupe hydraulique 5 par une conduite 11 connectée elle-même par le support arrière 4 à l'arrière de l'élément de guidage 2 pour délivrer l'huile sous pression nécessaire à l'avance du piston poussoir 6 en direction du tour, et par une soupape réglable 12 au canal 10. Des joints d'étanchéité élastiques 13 sont prévus entre les bagues de centrage 7 et le profilé porteur 1. La figure 1 montre que le profilé porteur est prévu pour accepter une lunette de centrage rotative 14 disposée entre la sortie de l'élément de guidage et le tour.

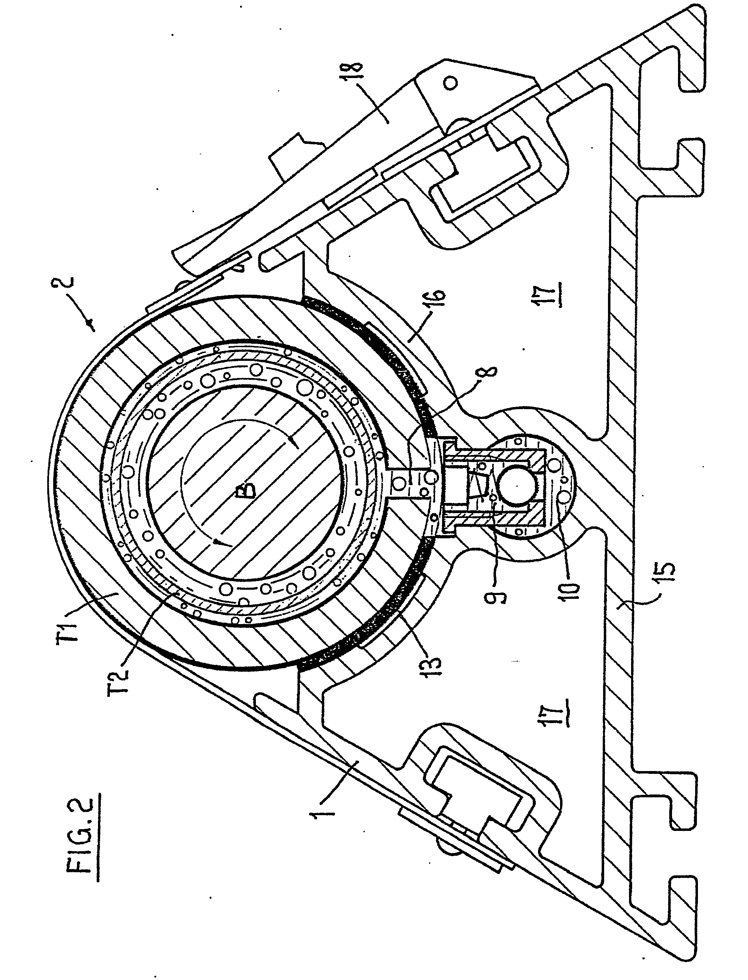

La figure 2 est une coupe du dispositif selon la ligne II-II de la figure 1. Le profilé porteur 1 est de section transversale substantiellement trapézoidale fermée avec un base 15 et un siège ou berceau en arc de cercle 16. Il n'est cependant pas nécessaire que la section soit de forme trapézoidale, l'essentiel étant qu'elle soit fermée et comporte une base 15 et un berceau en arc de cercle 16. La forme du profilé porteur 1 illustrée en figure 2 montre que celui-ci a un moment d'inertie très élevé, ce qui donne une excellente rigidité et stabilité au dispositif. L'élément de guidage 2 repose directement sur le berceau 16 par des joints 13 dont l'élasticité contribue à absorber les vibrations. Le profilé porteur accepte des éléments de guidage de différentes exécutions et diamètres internes. Le profilé comporte un canal 10 de distribution d'huile aux injecteurs latéraux 8,9, ce canal s'étendant sur toute la longueur du profilé. Les parois du canal 10 contribuent à augmenter le moment d'inertie et la stabilité du profilé en reliant le berceau 16 à la base 15. Il résulte de chaque côté des parois latérales du canal 10 une alvéole, ou chambre fermée 17 destinée au retour de l'huile qui s'échappe de l'extrémité avant de l'élément de guidage 2. Cette huile est donc reconduite à la pompe et au groupe hydraulique 5 à l'abri de toute pollution provenant de l'environnement extérieur. La figure 2 montre encore des brides de serrage rapide 18 en soi connues, permettant une mise en place et un enlèvement rapide de l'élément de guidage 2.

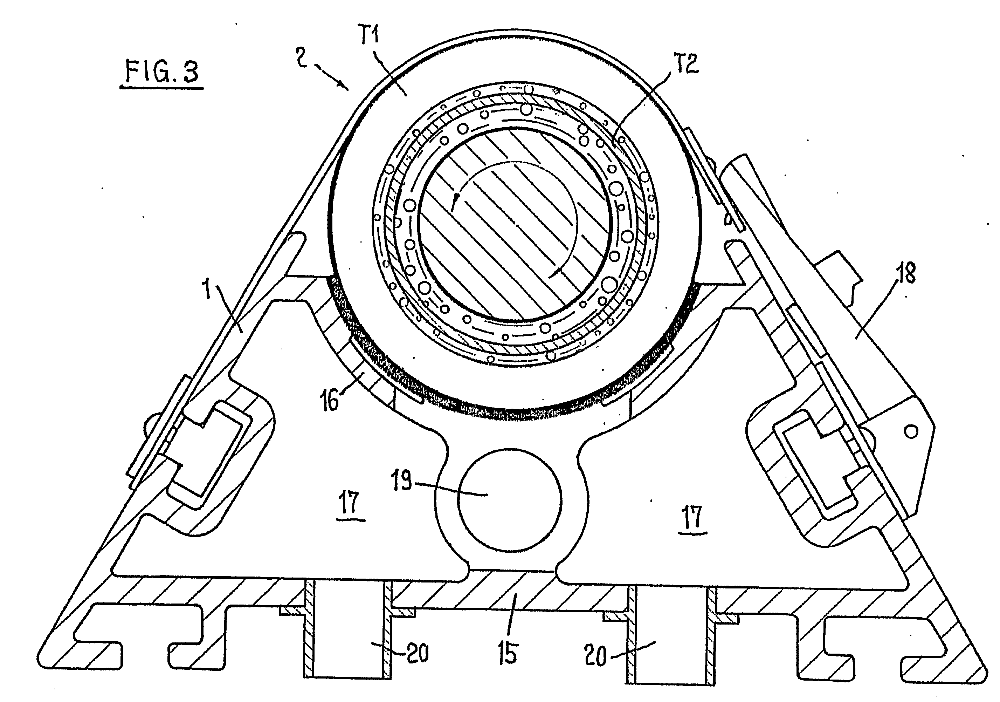

La figure 3 montre que le profilé porteur est coupé à son extrémité avant pour permettre à l'huile s'échappant de l'extrémité avant de l'élément de guidage de couler dans les chambres 17 et d'être évacuée par les sorties 20 reliées à la pompe. Un bouchon de fermeture 19 est prévu dans le canal 10 à cet endroit.

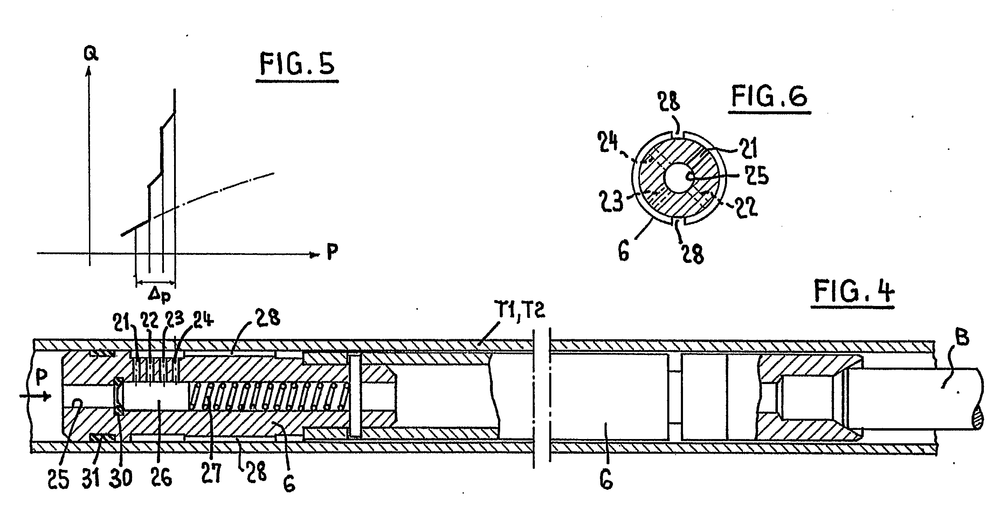

L'élément de guidage des figures 1 - 3 est composé d'un premier tube extérieur fixe T1 monté dans le profil porteur 1 comme expliqué précédemment et fixé à celui-ci par les brides de serrage rapide 18. A l'intérieur du premier tube fixe T1 est introduit avec un certain jeu un second tube ou tube de guidage T2 à paroi mince. Ce second tube T2, désigné ci-après par tube flottant, est entièrement libre dans le tube T1 et il contient la barre à usiner B et le piston poussoir 6 commandant l'avance de cette barre en direction du tour sous l'effet de l'huile sous pression délivrée par le groupe hydraulique 5. Par le fait que le tube flottant T2 ne possède aucune ouverture radiale et qu'il est entièrement libre dans le tube fixe T1, il est nécessaire de prévoir des mesures spéciales pour assurer l'apport d'huile de sustentation hydrodynamique entre la barre à usiner B et la face interne du tube flottant T2. Dans ce but, et comme indiqué en figure 4, le piston poussoir 6 comprend des voies de distribution radiales internes 21, 22, 23 et 24 reliées à une entrée d'huile 25 à l'arrière du piston poussoir 6 par un régulateur de débit 26 actionné contre la force de rappel d'un ressort 27 par la pression d'huile P. Ces voies de distribution internes 21-24 communiquent avec des rainures ou gorges longitudinales 28 à la surface extérieure du piston poussoir et permettent le passage de l'huile dans l'espace annulaire existant entre la barre et la face intérieure de son tube de guidage flottant T2. La figure 5 illustre le réglage du débit d'huile en fonction de la pression P agissant à l'arrière du piston poussoir. La figure 6 montre que contrairement à la disposition dans un même plan des voies de distribution 21-24, celles-ci peuvent aussi être réparties selon une hélice entourant le piston poussoir. Dans la position illustrée en figure 4, le régulateur 26 est en contact avec un joint d'étanchéité 30 afin d'éviter une entrée d'air dans la chambre de pression à l'arrière du piston poussoir dans le cas où la pression d'huile dans cette chambre est annulée et remplacée par une dépression pour aspirer le piston poussoir vers l'arrière du dispositif lorsqu'il est nécessaire de charger une nouvelle barre à usiner dans l'élément de guidage. Un autre joint d'étanchéité 31 est prévu à la face extérieure du piston poussoir, à l'arrière de celui-ci, pour empêcher toute aspiration d'air entre le piston poussoir et le tube de guidage lorsque le piston poussoir est retiré par dépression.

Lorsqu'une barre à usiner est engagée dans le tube flottant T2 et entraînée en rotation par la poupée du tour, le groupe hydraulique est mis sous pression et la barre est sollicitée par le piston poussoir en direction du tour. Ce qui précède montre que le piston a deux fonctions: d'une part de faire avancer la barre et d'autre part d'alimenter en huile sous pression l'espace annulaire entre le tube flottant et la barre. Par ailleurs, les injecteurs latéraux 8,9 (fig.1) permettent une alimentation latérale en huile dans l'espace annulaire existant entre la face intérieure du tube fixe T1 et la surface extérieure du tube flottant T2.

Lorsque la barre est mise en rotation par la poupée du tour, il se crée entre celle-ci et son tube de guidage une turbulence hydraulique formant palier hydrodynamique pour la barre en rotation. La rotation du palier d'huile entraîne à son tour la rotation du tube flottant, ce qui crée également un palier hydrodynamique entre le tube flottant et le tube fixe.

Par rapport aux dispositifs connus qui ne comportent qu'un seul tube de guidage fixe, l'élément de guidage selon l'invention avec un tube fixe et un tube flottant offre les avantages suivants. Il permet d'augmenter sensiblement, p.ex. de 30 à 40 % la vitesse de rotation de la barre (pouvant atteindre jusqu'à 18000 t/min) étant donné que l'effet hydrodynamique est réparti sur deux paliers au lieu d'un seul. En effet, la vitesse de rotation du palier hydrodynamique entre tube flottant et barre est diminuée en raison de la vitesse de rotation du tube flottant. De même, la vitesse de rotation du palier hydrodynamique entre le tube fixe et le tube flottant est également diminuée en raison de la vitesse de rotation du tube flottant. Ceci permet une augmentation sensible de la vitesse de la barre car la répartition en deux paliers permet, même à de très grandes vitesses de rotation de la barre, d'éviter la formation de mousse dans l'huile qui se produit immanquablement lorsque la turbulence d'huile atteint un seuil déterminé. L'effet de mousse diminue la viscosité de l'huile et l'efficacité du palier hydrodynamique.

Par ailleurs, il a été constaté qu'il est souhaitable de pouvoir calibrer le débit d'huile entre la barre et son tube de guidage en fonction des profils de barre, du jeu entre la barre et le tube et des vitesses de rotation à atteindre. Les pistons connus permettent ce calibrage par l'intermédiaire d'une intervention manuelle sur le piston. Ceci nécessite un arrêt de la machine, le retrait de la barre et celui du piston poussoir hors de son tube de guidage, par l'avant de celui-ci. Par contre, le piston illustré en figure 4, à l'avantage de permettre ce calibrage du débit d'huile simplement et uniquement par variation de la pression P à l'arrière du piston poussoir. Une augmentation de cette pression déplace le régulateur 26 vers la droite, permettant le passage de l'huile à travers une ou plusieurs voies de distribution 21-24 (voir aussi fig.5). Ceci apporte l'avantage très appréciable de permettre les réglages et l'optimalisation de l'effet de palier hydrodynamique lorsque le dispositif est en fonctionnement, la barre étant entraînée en rotation dans son tube de guidage.

Il est évident qui si les vitesses exigées des barres à usiner ne sont pas extrêmes, on peut équipper le dispositif d'un tube de guidage unique fixe, comme connu à ce jour, en profitant toutefois de tous les avantages offerts par le piston poussoir décrit ci-dessus. Dans ce cas, les injecteurs latéraux 8,9 entre le canal 10 et le tube de guidage sont en principe superflus.

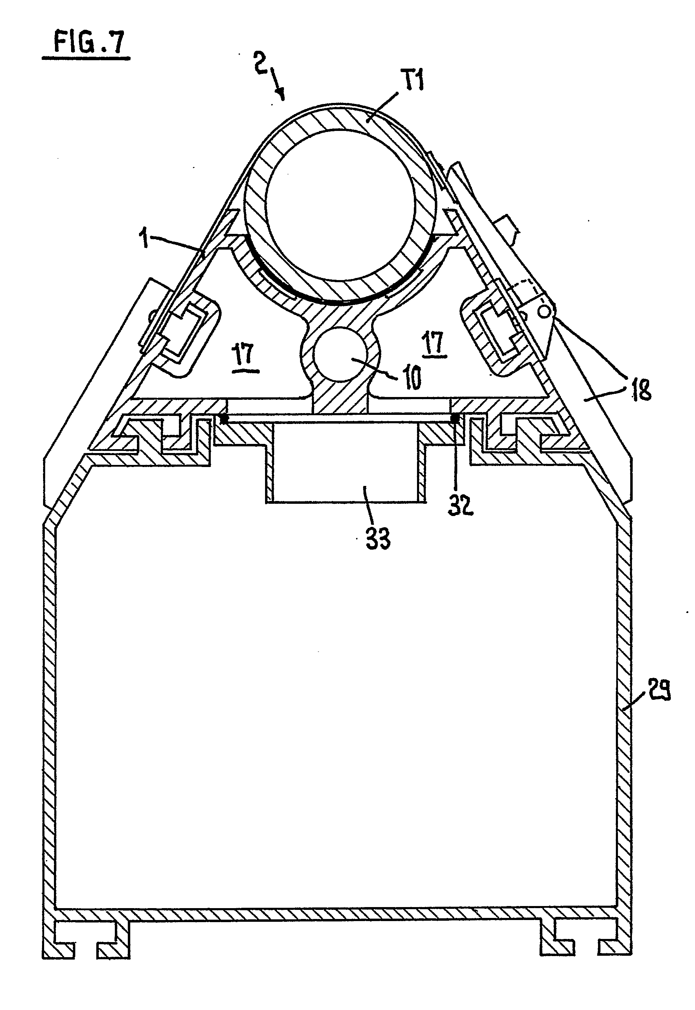

Dans le but d'augmenter la rigidité et la stabilité du dispositif, on peut prévoir un caisson rapporté 29 faisant corps avec le profilé porteur 1 comme indiqué en figure 7. Le caisson est tenu dans des nervures du profilé porteur 1 et un joint d'étanchéité 32 est prévu autour de sa partie centrale afin de prévenir les fuites d'huile vers l'extérieur, cette huile s'écoulant des chambres 17 dans l'entrée 33 du caisson. Il est clair qu'un tel caisson augmente le moment d'inertie et en conséquence la stabilité de l'ensemble. Ce caisson peut aussi être prévu sous forme intégrale avec le profilé 1. En outre, il est possible de prévoir le caisson 29 comme un réservoir dans lequel on peut loger le groupe hydraulique, la pompe d'huile (voir fig. 1) et les connexions hydrauliques entre le groupe hydraulique et le dispositif, ce qui simplifie les connexions hydrauliques tout en réduisant les frais d'obtention. L'ensemble de la figure 7 comprenant le profilé porteur 1 et le réservoir 29 devient alors une unité autonome à monter sur des tours monobroches.

Comme indiqué dans l'introduction, les deux aspects de l'invention contribuent à augmenter la stabilité du dispositif, à permettre des vitesses très élevées de rotation de la barre sans sacrifier la précision d'usinage, à permettre un échange rapide et facile de l'élément de guidage assemblé par des brides de serrage rapide et à simplifier la conception du dispositif. En particulier, l'absence de sièges nécessitant un assemblage de précision contribue à diminuer le coût de fabrication du dispositif.

## Revendications

1. Dispositif guide barre pour tour monobroche, comportant un profilé porteur (1) sur lequel est monté de manière amovible un élément de guidage (2) d'une barre à usiner (B), dont l'avance en direction du tour est commandée par un piston poussoir (6) logé dans l'élément de guidage (2) et une distribution d'huile sous pression (5) injectée d'une part à l'arrière du piston poussoir (6) pour commander l'avance de celui-ci dans l'élément de guidage (2) et d'autre part latéralement, entre la barre à usiner (B) et la paroi interne de son élément de guidage (2), pour créer un palier hydrodynamique supportant la barre à usiner (B) mise en rotation par la poupée du tour, caractérisé par le fait que le profilé porteur (1) est de section transversale fermée avec une base (15) et un berceau (16) en arc de cercle susceptible de recevoir des éléments de guidage (2) de différentes exécutions et diamètres internes fixés au profilé porteur (1) par des brides de serrage rapide (18), et en ce que des canaux de distribution (10) et de retour d'huile (17) sont prévus dans le profilé porteur (1).

2. Dispositif selon la revendication 1, caractérisé en ce que le canal de distribution (10) s'étend sur toute la longueur du profilé porteur (1) et qu'il communique par des voies de connexion latérales (8, 9) avec l'élément de guidage (2) pour délivrer l'huile sous pression à celui-ci.

3. Dispositif selon la revendication 1 ou 2, caractérisé en ce que les parois latérales du canal de distribution d'huile (10) relient le berceau (16) du profilé porteur (1) à la base de celui-ci, ces parois latérales augmentant la rigidité et la stabilité du profilé porteur (1) et délimitant de chaque côté du canal (10) une chambre fermée (17) servant de canal de retour pour l'huile qui sort à l'avant de l'élément de guidage (2).

4. Dispositif selon la revendication 1, caractérisé par le fait qu'il est conçu de manière à recevoir dans sa partie avant, du côté tour, une lunette de centrage rotative (14) destinée a supporter la barre à usiner (B) à la sortie de l'élément de guidage (2).

5. Dispositif guide barre pour tour monobroche, comportant un profilé porteur (1) sur lequel est monté de manière amovible un élément de guidage (2) d'une barre à usiner (B) dont l'avance en direction du tour est commandée par un piston poussoir (6) logé dans l'élément de guidage (2) et une distribution d'huile sous pression (5) injectée d'une part à l'arrière du piston poussoir (6) pour commander l'avance de celui-ci dans l'élément de guidage (2) et d'autre part latéralement, entre la barre à usiner (B) et la paroi interne de son élément de guidage (2), pour produire un palier hydrodynamique supportant la barre à usiner (B) mise en rotation par la poupée du tour, caractérisé en ce que l'élément de guidage (2) se compose d'un premier tube fixe (T1) monté de manière amovible dans le profilé porteur (1) et d'un second tube (T2) logé avec jeu dans le premier tube (T1) et tournant librement dans ce premier tube lorsque la barre à usiner (B) est entraînée en rotation par la poupée du tour, le second tube (T2) contenant la barre à usiner (B) et le piston poussoir (6).

6. Dispositif selon la revendication 5, caractérisé par le fait que le profilé porteur (1) comporte en son centre un canal (10) de distribution d'huile permettant de distribuer l'huile sous pression entre la surface interne du premier tube (T1) et la surface externe du second tube (T2) par l'intermédiaire de voies de connexion latérales (8, 9), l'huile injectée entre les deux tubes (T1, T2) produisant un palier hydrodynamique permettant la sustentation du second tube (T2).

7. Dispositif selon la revendication 1 ou 5, caractérisé par le fait que le piston poussoir (6) comprend un régulateur de débit d'huile (26), ce régulateur étant déplacé axialement dans le piston poussoir (6) par la pression d'huile (P) agissant à l'arrière du piston poussoir, afin de permettre, pendant la marche du dispositif, de régler le débit d'huile qui passe d'un groupe hydraulique à travers le piston poussoir (6) au devant de celui-ci pour produire un palier hydrodynamique entre la barre à usiner (B) et son tube de guidage (T2) lorsque la barre est en rotation.

8. Dispositif selon la revendication 7, caractérisé en ce que le régulateur (26) se déplace axialement devant des passages latéraux (21–24) du piston poussoir, ces passages communiquant avec des rainures longitudinales (28) à la surface externe du piston poussoir (6), ces passages et ces rainures permettant l'amenée de l'huile sous pression de l'arrière du piston poussoir au devant de celui-ci, entre la barre à usiner (B) et son tube de guidage (T2).

9. Dispositif selon l'une des revendications 1 ou 5 à 8, caractérisé par le fait que le piston poussoir comprend des joints d'étanchéité (30, 31), respectivement en son centre (30) pour la partie arrière du régulateur (26), afin de garantir l'étanchéité lorsque le piston poussoir est aspiré vers l'arrière du dispositif par dépression, pour permettre l'introduction d'une nouvelle barre à usiner dans le dispositif, et à sa surface arrière externe (31), afin d'empêcher une aspiration d'air entre piston poussoir et tube de guidage lorsque le piston poussoir est retiré par dépression.

10. Dispositif guide barre pour tour monobroche selon la revendication 1, caractérisé en ce que le profilé porteur (1) comprend à sa partie inférieure un caisson (29) contribuant à augmenter la rigidité et la stabilité du dispositif, ce caisson étant susceptible de contenir un groupe hydraulique (5) et les conduites hydrauliques entre ledit groupe et le dispositif.

11. Dispositif selon la revendication 10, caractérisé en ce que le caisson (29) est intégral avec le profilé porteur (1).

**Claims**

1. A guide-bar device for a single spindle lathe, comprising a sectional carrier (1) on which is removably secured a guiding element (2) for a bar stock to be machined (B), the advance of said bar stock towards the lathe being controlled by a push-piston (6) located in the guiding element (2), and a distribution of oil under pressure (5) injected on the one hand at the back of said push-piston (6) for controlling its advance in said guiding tube (2) and on the other hand, laterally between said bar stock to be machined (B) and the internal wall of its guiding element (2) in order to create a hydrodynamic bearing for supporting said bar stock to be machined (B) which is set into rotation by the head stock of the lathe, characterized in that said sectional carrier (1) is of a closed cross section with a base (15) and a circular bed (16) for receiving guiding elements (2) of different executions and internal diameters fastened to the sectional carrier (1) by rapid action locking clamps (18), and in that channels (10) for the distribution and the return of oil (17) are provided in the sectional carrier (1).

2. A device according to claim 1, characterized in that said distribution channel (10) extends on the entire length of the sectional carrier (1) and communicates by radial openings (8, 9) with said guiding element (2) for delivering oil under pressure to the latter.

3. A device according to claim 1 or 2, characterized in that the lateral walls of said oil distribution channel (10) connect said bed (16) of the sectional carrier (1) to said base of the latter, said lateral walls increasing the rigidity and the stability of said sectional carrier (1) and creating on each side of said distribution channel (10) a closed chamber (17) serving as a channel for the return of oil which escapes from the front part of the guiding element (2).

4. A device according to claim 1, characterized in that a rotating centering groin (14) for supporting said bar stock to be machined (B) coming out of said guiding element (2) is provided in the front part of said device, in the vicinity of the lathe.

5. A guide-bar device for a single spindle lathe, comprising a sectional carrier (1) on which is removably secured a guiding element (2) for a bar stock to be machined (B), the advance of said bar stock towards the lathe being controlled by a push-piston (6) located in the guiding element (2), and a distribution (5) of oil under pressure injected on the one hand at the back of said push-piston (6) for controlling its advance in said guiding tube (2), and on the other hand, laterally between said bar stock to be machined (B) and the internal wall of its guiding element (2) in order to create a hydrodynamic bearing for supporting said bar stock to be machined (B) which is set into rotation by the head stock of the lathe, characterized in that said guiding element (2) is composed of a first, fixed tube (T1) removably secured on said sectional carrier (1) and of a second tube (T2) enclosed with play in said first tube (T1) and rotating freely in said first tube when said bar stock to be machined (B) is set into rotation by the head stock of the lathe, said second tube (T2) enclosing said bar stock to be machined (B) and said push-piston (6).

6. A device according to claim 5, characterized in that said sectional carrier (1) comprises in its center an oil distribution channel (10) permitting to distribute through radial openings (8, 9) oil under pressure between the internal wall of said first tube (T1) and the external wall of said second tube (T2), the oil injected between both tubes (T1, T2) forming a hydrodynamic bearing which floatingly supports said second tube (T2).

7. A device according to claim 1 or 5, characterized in that said push-piston (6) comprises a flow regulating valve (26) which is axially shifted in the push-piston (6) by the pressure of oil (P) acting at the back of said push-piston for permitting, during the working of the device, to adjust the flow of oil which passes from a hydraulic group through said push-piston (6) to the front part of the latter for creating a hydrodynamic bearing between said bar stock to be machined (B) and its guiding tube (T2) when said bar stock is set into rotation.

8. A device according to claim 7, characterized in that said flow regulating valve (26) is axially shifted in front of radial openings (21–24) of said push-piston, said openings communicating with longitudinal grooves (28) at the external surface of said push-piston (6), said openings and said grooves permitting delivery of oil under pressure from the back of said push-piston to the front part of the latter, between said bar stock to be machined (B) and its guiding tube (T2).

9. A device according to claim 1 or 5 to 8, characterized in that said push-piston comprises tight joints (30, 31) respectively in its center (30) for the back part of said regulating valve (26) in order to guarantee the tightness when said push-piston is aspirated by depression towards the back of the device for permitting introduction of a new bar stock to be machined in the device, and at its external lateral back surface (31) in order to avoid any aspiration of air between said push-piston and its guiding tube when said push-piston is withdrawn by depression.

10. Guide-bar device for single spindle lathe according to claim 1, characterized in that the sectional carrier (1) comprises at its base part a box (29) which contributes to an increase of the rigidity and the stability of the device, this box being adapted to enclose a hydraulic group (5) and the hydraulic connections between said group and the device.

11. A device according to claim 10, wherein said box (29) is integral with said sectional carrier (1).

**Patentansprüche**

1. Stangenführungsvorrichtung für eine Einspindeldrehmaschine, mit einem Trägerprofil (1), an welchem ein Führungselement (2) für eine zu bearbeitende Stange (B) abnehmbar angebracht ist, deren Vorschub in Richtung der Drehmaschine durch einen im Führungselement (2) angeordneten Druckkolben (6) gewährleistet ist, und einem Verteiler (5) für Drucköl, welches einerseits hinter dem Druckkolben (6) eingespritzt wird, um den Vorschub desselben im Führungselement (2) zu steuern, und andererseits seitlich zwischen der zu bearbeitenden Stange (B) und der Innenwandung ihres Führungselements (2), um ein hydrodynamisches Lager zur Abstützung der zu bearbeitenden, vom Spindelstock der Drehmaschine in Rotation versetzten Stange (B) zu schaffen, dadurch gekennzeichnet, daß das Trägerprofil (1) einen abgeschlossenen Querschnitt mit einer Basis (15) und einem halbkreisförmigen Trägerbogen (16) aufweist, welcher geeignet ist, Führungselemente (2) verschiedener Ausführungen und mit verschiedenen Innendurchmessern aufzunehmen, welche am Trägerprofil (1) durch Schnellspannbrücken (18) befestigt werden, und daß Oelverteil- (10) und -rücklaufkanäle (17) im Trägerprofil (1) vorgesehen sind.

2. Vorrichtung nach Anspruch 1, dadurch gekennzeichnet, daß der Verteilkanal (10) sich über die ganze Länge des Trägerprofils (1) erstreckt, und daß er durch seitliche Verbindungskanäle (8, 9) mit dem Führungselement (2) verbunden ist, um dieses mit Drucköl zu versorgen.

3. Vorrichtung nach Anspruch 1 oder 2, dadurch gekennzeichnet, daß die Seitenwände des Oelverteilkanals (10) den Trägerbogen (16) des Trägerprofils (1) mit dessen Basis verbinden, wobei diese Seitenwände die Steifheit und Festigkeit des Trägerprofils (1) erhöhen und beidseits des Kanals (10) eine abgeschlossene Kammer (17) bilden, welche als Rücklaufkanal für das Oel dient, das vorne am Führungselement (2) austritt.

4. Vorrichtung nach Anspruch 1, dadurch gekennzeichnet, daß sie geeignet ist, in ihrem vorderen, drehmaschinenseitigen Teil eine rotierende Zentrierlünette (14) zur Abstützung der zu bearbeitenden Stange (B) am Ausgang des Führungselementes (2) aufzunehmen.

5. Stangenführungsvorrichtung für eine Einspindeldrehmaschine, mit einem Trägerprofil (1), an welchem ein Führungselement (2) für eine zu bearbeitende Stange (B) abnehmbar angebracht ist, deren Vorschub in Richtung der Drehmaschine durch einen im Führungselement (2) angeordneten Druckkolben (6) gewährleistet ist, und einem Verteiler (5) für Drucköl, welches einerseits hinter dem Druckkolben (6) eingespritzt wird, um den Vorschub desselben im Führungselement (2) zu steuern, und andererseits seitlich zwischen der zu bearbeitenden Stange (B) und der Innenwandung ihres Führungselements (2), um ein hydrodynamisches Lager zur Abstützung der zu bearbeitenden, vom Spindelstock der Drehmaschine in Rotation versetzten Stange (B) zu schaffen, dadurch gekennzeichnet, dass das Führungselement (2) aus einem ersten, festen Rohr (T1), welches abnehmbar im Trägerprofil (1) befestigt ist, und einem mit Spiel im ersten Rohr (T1) angeordneten zweiten Rohr (T2) zusammengesetzt ist, welches sich im ersten Rohr frei dreht, wenn die zu bearbeitende Stange (B) vom Spindelstock der Drehmaschine in Rotation versetzt wird, wobei das zweite Rohr (T2) die zu bearbeitende Stange (B) sowie den Druckkolben (6) einschliesst.

6. Vorrichtung nach Anspruch 5, dadurch gekennzeichnet, daß das Trägerprofil (1) in der Mitte einen Oelverteilkanal (10) aufweist, der es gestattet, über seitliche Verbindungskanäle (8, 9) Drucköl zwischen der Innenfläche des ersten Rohres (T1) und der Außenfläche des zweiten Rohres (T2) zu verteilen, wobei das zwischen den beiden Rohren (T1, T2) eingespritzte Oel ein hydrodynamisches Lager zur schwebenden Aufhängung des zweiten Rohres (T2) bildet.

7. Vorrichtung nach Anspruch 1 oder 5, dadurch gekennzeichnet, daß der Druckkolben (6) einen Oeldurchflußregler (26) aufweist, wobei dieser Regler durch den hinten am Druckkolben (6) wirkenden Oeldruck (P) axial im Druckkolben verschoben wird, und der während des Betriebs der Vorrichtung die Regelung der Oelmenge erlaubt, welche von einem Hydraulikaggregat durch den Druckkolben (6) zu dessen Vorderseite fließt, um ein hydrodynamisches Lager zwischen der zu bearbeitenden Stange (B) und ihrem Führungsrohr (T2) zu bilden, wenn sich die Stange dreht.

8. Vorrichtung nach Anspruch 7, dadurch gekennzeichnet, daß der Regler (26) sich axial vor Querbohrungen (21–24) im Druckkolben verschiebt, wobei diese Bohrungen mit Längsrillen (28) in der Außenfläche des Druckkolbens (6) verbunden sind und diese Bohrungen und Längsrillen die Zufuhr von Drucköl von der Hinterseite des Druckkolbens zu dessen Vorderseite erlauben, zwischen die zu bearbeitende Stange (B) und deren Führungsrohr (T2).

9. Vorrichtung nach einem der Ansprüche 1 oder 5–8, dadurch gekennzeichnet, daß der Druckkolben Dichtungen (30, 31) aufweist, und zwar einerseits im Zentrum (30), zur Abdichtung des hinteren Teils des Reglers (26), wenn der Druckkolben zum Einführen einer neuen zu bearbeitenden Stange in die Vorrichtung durch Unterdruck zurückgezogen wird, und andererseits hinten in der äußeren Oberfläche (31), um ein Ansaugen von Luft zwischen den Druckkolben und das Führungsrohr beim Zurückziehen des Druckkolbens durch Unterdruck zu verhindern.

10. Stangenführungsvorrichtung für eine Einspindeldrehmaschine nach Anspruch 1, dadurch gekennzeichnet, daß das Trägerprofil (1) an der Unterseite einen Kasten (29) aufweist, der zur Erhöhung der Starrheit und Festigkeit der Vorrichtung beiträgt, wobei dieser Kasten ein Hydraulikaggregat (5) sowie die hydraulischen Leitungen zwischen diesem Aggregat und der Vorrichtung aufnehmen kann.

11. Vorrichtung nach Anspruch 10, dadurch gekennzeichnet, daß der Kasten (29) und das Trägerprofil (1) aus einem Stück bestehen.

EP 0 214 926 B1

# FIG.1

FIG.2

EP 0 214 926 B1

FIG.3

FIG.5

FIG.6

FIG.4

EP 0 214 926 B1

FIG.7